# EUROPÄISCHE PATENTSCHRIFT

(11) **EP 2 457 434 B1**
(45) Veröffentlichungstag und Bekanntmachung des Hinweises auf die Patenterteilung: **26.06.2013**
(21) Anmeldenummer: 11184972.5
(22) Anmeldetag: 13.10.2011
(51) Int. Cl.: A01F 12/24

(54) **Dreschkorb mit wenigstens einem demontierbaren Einsatz**
Concave with at least one deconstructable insert
Panier de battage doté d'au moins un insert démontable

(30) Priorität: 24.11.2010 DE 102010061863
(43) Veröffentlichungstag der Anmeldung: 30.05.2012
(73) Patentinhaber: Deere & Company, Moline, IL 61265-8098 (US)
(72) Erfinder: Fuchs, Volker, 54439 Saarburg (DE); Hess, Wolfgang, 66877 Ramstein (DE)
(74) Vertreter: Holst, Sönke

(56) Entgegenhaltungen:
- EP-A1- 0 927 512
- EP-A1- 1 197 136
- DE-U- 6 916 279
- US-A- 3 568 682

## Beschreibung

Die Erfindung betrifft einen Dreschkorb mit einer tragenden Struktur, wenigstens einem lösbar an der tragenden Struktur fixierten oder fixierbaren Einsatz mit einem Siebbelag und einem beweglich an der tragenden Struktur abgestützten Halteelement, das zwischen einer Halteposition, in der es sich in eine Öffnung im Einsatz erstreckt und den Einsatz in einer Arbeitsposition an der tragenden Struktur fixiert, und einer Freigabeposition bewegbar ist, in der es sich nicht in die Öffnung erstreckt und der Einsatz von der tragenden Struktur abgenommen werden kann.

### Stand der Technik

Landwirtschaftliche Mähdrescher sind große Maschinen, die landwirtschaftlich angebautes Erntegut, das Korn trägt, ernten, dreschen, trennen und reinigen. Das erhaltene saubere Korn wird in einem am Mähdrescher angeordneten Korntank gespeichert. Zum Dreschen dienen in der Regel Tangentialdrescheinrichtungen mit einem Dreschkorb und einer das Erntegut tangential fördernden Dreschtrommel oder das Erntegut axial fördernde Axialdrescheinrichtungen mit Axialdreschrotoren, die ebenfalls mit einem Dreschkorb zusammenwirken. Die Dreschkörbe setzen sich üblicherweise aus äußeren Wangen und parallel dazwischen angeordneten Bogenleisten sowie Dreschleisten zusammen, die zwischen sich Zwischenräume belassen, in denen sich parallel zu den Bogenleisten orientierte Korbdrähte befinden. Der Dreschkorb umgibt die Dreschtrommel über einen Teil ihres Umfangs und schließt mit ihr einen Spalt ein, durch den das zu dreschende Erntegut gezwängt wird. Während das Erntegut durch den Spalt gefördert wird, scheiden sich Erntegutteile (das Korn) ab, fallen durch die Zwischenräume und werden einer Reinigungseinrichtung zugeführt. Aufgrund der Beschaffenheit des Ernteguts lassen sich Bestandteile mehr oder weniger gut herauslösen, so dass es sinnvoll ist, die Dreschkörbe dem jeweiligen Erntegut anpassen zu können.

In der EP 1 059 023 A2 wird ein Mähdrescher mit einem Dreschkorb beschrieben, dessen Belag sich im vorderen Bereich aus drei nebeneinander angeordneten Abschnitten zusammensetzt, denen ein einziges oder drei Siebsegmente folgen. Der mittlere Abschnitt kann nach vom durch eine Revisionsöffnung entnommen werden. Die anderen Beläge werden dann nacheinander zur Mitte geschoben und ebenfalls nach vorn durch die Revisionsöffnung entfernt. Die Abschnitte werden an ihrem vorderen Ende durch eine angeschraubte Klemmleiste am Dreschkorbrahmen fixiert und untergreifen an ihrem rückwärtigen Ende einen Abschnitt des rückwärtigen Siebsegments oder sind damit drehbar verbunden. Hierbei erweist sich der Ein- und Ausbau der Siebsegmente als relativ zeitaufwändig.

Die als gattungsbildend angesehene EP 1 197 136 A1 beschreibt austauschbare Korbeinsätze, die am stromauf liegenden Ende des Dreschkorbs angeordnet sind und durch Einsätze mit in anderen Abständen positionierten Korbdrähten ausgetauscht werden können. Die Korbeinsätze weisen trapezförmige Korbwangen auf, die in formgleichen Ausnehmungen der Korbwangen des Dreschkorbs aufgenommen werden und durch Haltelaschen damit verbunden werden, indem endseitig in die Haltelaschen eingesteckte Sechskantschrauben in Gewindelöcher in den Korbwangen der Korbeinsätze und in Gewindelöcher in den Wangen des Dreschkorbs eingeschraubt werden. Diese Befestigungsart erfordert einen seitlichen Zugang zum Dreschkorb und ist auf einteilige Korbeinsätze eingeschränkt, die relativ schwer sind.

In der US 3 568 682 A wird ein abnehmbares Trennrost für einen Axialmähdrescher beschrieben, das an einem Ende durch eine Einhakverbindung und am anderen Ende durch eine Schraubverbindung fixiert wird, wobei die Schraube auch bei gelöstem Trennrost an der Halterung des Trennrosts verbleibt.

Die EP 0 927 512 A1 beschreibt ein Segment eines Dreschkorbs, das aus Tragelementen und einem Sieb zusammengesetzt ist. Ein zum Erreichen einer formschlüssigen Verbindung mit Rahmenteilen des Dreschkorbs ausgebildeter Riegel ist an einem Tragelement des Segments drehbar angebracht und wird durch einen Hebel bewegt.

### Aufgabe der Erfindung

Die der Erfindung zu Grunde liegende Aufgabe wird darin gesehen, einen Dreschkorb mit demontierbaren Einsätzen zu schaffen, bei dem die oben erwähnten Nachteile nicht oder nur in vermindertem Maße auftreten.

### Lösung

Diese Aufgabe wird erfindungsgemäß durch die Lehre des Patentanspruchs 1 gelöst, wobei in den weiteren Patentansprüchen Merkmale aufgeführt sind, die die Lösung in vorteilhafter Weise weiterentwickeln.

Ein Dreschkorb umfasst eine tragende Struktur, die sich in der Regel aus Wangen und Dreschleisten zusammensetzt, und wenigstens einen lösbar an der tragenden Struktur anbringbaren oder angebrachten Einsatz mit einem Siebbelag. Der Einsatz setzt sich insbesondere aus einem Rahmen mit sich axial erstreckenden Dreschleisten und sich in Umfangsrichtung des Dreschkorbs erstreckenden Bogenleisten und dem im Rahmen angeordneten Siebbelag (z. B. Drähten) zusammen. Ein Halteelement ist drehbar an der tragenden Struktur abgestützt und zwischen einer Halteposition, in der es sich in eine Öffnung im Einsatz erstreckt und den Einsatz in einer Arbeitsposition an der tragenden Struktur fixiert, und einer Freigabeposition bewegbar, in der es sich nicht in die Öffnung erstreckt und der Einsatz von der tragenden Struktur abgenommen werden kann. Das Halteelement weist eine an einem Exzenter angebrachte Fläche auf, die den Einsatz bei in die Freigabeposition verbrachter Welle aus seiner Arbeitsposition in eine angehobene Position verbringt. Dadurch kann der Bediener den Einsatz leichter ergreifen und herausnehmen, als wenn er in seiner Arbeitsposition im Dreschkorb verbleiben würde.

Auf diese Weise braucht ein Bediener lediglich das Halteelement zu bewegen, um das Halteelement in die Freigabeposition zu verbringen und dann den Einsatz aus der tragenden Struktur des Dreschkorbs entnehmen zu können. Der Einsatz kann dann gegen einen weiteren Einsatz (der beispielsweise einen anderen Belag zur Ernte größerer oder kleinerer Kömer haben kann) ausgetauscht, in die tragende Struktur eingelegt und schließlich durch Rückdrehung des Halteelements in die Halteposition erreicht werden, dass das Halteelement den Einsatz an der tragenden Struktur festhält.

Das Halteelement ist an einer drehbaren Welle befestigt, die auch einen Antrieb mehrerer Halteelemente gleichzeitig ermöglichen kann, welche einen Einsatz oder mehrere, seitlich nebeneinander (oder hintereinander) angeordnete Einsätze gleichzeitig an der tragenden Struktur des Dreschkorbs fixieren. Die Längsachse der Welle erstreckt sich vorzugsweise in axialer Richtung des Dreschkorbs, d. h. parallel zu den dessen Dreschleisten und quer zu den Wangen. Es bietet sich an, sie an der Einlassseite des Dreschkorbs zu positionieren. Ihr Antrieb erfolgt insbesondere über einen an der Vorderseite des Dreschkorbs angeordneten Spindeltrieb und einen Exzenter. Der Spindeltrieb kann an der Vorderseite des Dreschkorbs an einer relativ gut zugänglichen Stelle mittels eines geeigneten Schlüssels gedreht werden, um die Welle zwischen der Halteposition und der Freigabeposition des Halteelements zu rotieren. Alternativ ist zum Antrieb der Welle ein fremdkraftbetätigter Aktor, z. B. Hydraulikzylinder oder Elektromotor, vorgesehen.

### Ausführungsbeispiel

In den Zeichnungen ist ein nachfolgend näher beschriebenes Ausführungsbeispiel der Erfindung dargestellt. Es zeigt:
- Fig. 1: eine schematische seitliche Ansicht eines Mähdreschers mit einem Tangentialdreschwerk,
- Fig. 2: eine perspektivische Ansicht des Dreschkorbs des Tangentialdreschwerks von vorn und oben,
- Fig. 3: eine perspektivische Ansicht des Dreschkorbs des Tangentialdreschwerks von hinten und unten,
- Fig. 4: einen Schnitt durch den Dreschkorb entlang der Linie 4-4 der Figur 2 bei in der Halteposition befindlichem Halteelement,
- Fig. 5: eine vergrößerte Darstellung des Halteelements der Figur 4,
- Fig. 6: einen Schnitt durch den Dreschkorb entlang der Linie 4-4 der Figur 2 bei in der Freigabeposition befindlichem Halteelement,
- Fig. 7: eine vergrößerte Darstellung des Halteelements der Figur 6.

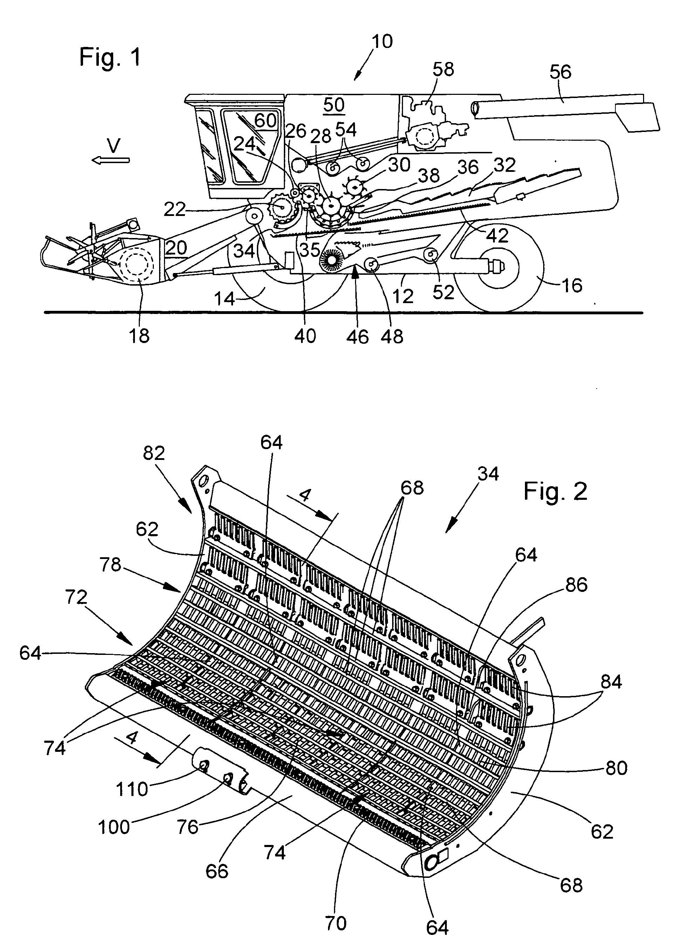

Die Figur 1 zeigt einen selbstfahrenden Mähdrescher 10 mit einem Rahmen 12, der sich über angetriebene vordere Räder 14 und lenkbare rückwärtige Räder 16 auf dem Boden abstützt und von diesen fortbewegt wird. Die Räder 14 werden mittels nicht gezeigter Antriebsmittel in Drehung versetzt, um den Mähdrescher 10 z. B. über ein abzuerntendes Feld zu bewegen. Im Folgenden beziehen sich Richtungsangaben, wie vorn und hinten, auf die Fahrtrichtung V des Mähdreschers 10 im Erntebetrieb.

An den vorderen Endbereich des Mähdreschers 10 ist eine Erntegutbergungsvorrichtung 18 in Form eines Schneidwerks abnehmbar angeschlossen, um beim Erntebetrieb Erntegut in Form von Getreide oder andere, dreschbare Halmfrüchten von dem Feld zu ernten und es nach oben und hinten durch einen Schrägförderer 20 einem Mehrtrommeldreschwerk zuzuführen, das - in Fahrtrichtung V hintereinander angeordnet - eine Dreschtrommel 22, eine Abstreiftrommel 24, eine oberschlächtig arbeitende Fördertrommel 26, einen Tangentialseparator 28 sowie eine Wendetrommel 30 umfasst. Stromab der Wendetrommel 30 befindet sich ein Strohschüttler 32. Die Dreschtrommel 22 ist in ihrem unteren und rückwärtigen Bereich von einem Dreschkorb 34 umgeben. Unterhalb der Fördertrommel 26 ist eine mit Öffnungen versehene oder geschlossene Abdeckung 44 angeordnet, während sich oberhalb der Fördertrommel 26 eine fest stehende Abdeckung und unterhalb des Tangentialseparators 28 ein Separierkorb 36 mit verstellbaren Fingerelementen befindet. Unterhalb der Wendetrommel 30 ist ein Fingerrechen 38 angeordnet. Das durch den Dreschkorb 34, den Separierkorb und die Strohschüttler 32 hindurchtretende, Körner und Verunreinigungen enthaltende Gemisch gelangt über Förderböden 40, 42 in eine Reinigungseinrichtung 46. Durch die Reinigungseinrichtung 46 gereinigtes Getreide wird mittels einer Körnerschnecke 48 einem nicht gezeigten Elevator zugeführt, der es in einen Korntank 50 befördert. Eine Überkehrschnecke 52 gibt unausgedroschene Ährenteile durch einen weiteren nicht gezeigten Elevator zurück in den Dreschprozess. Die Spreu kann an der Rückseite der Siebeinrichtung durch einen rotierenden Spreuverteiler ausgeworfen werden, oder sie wird durch einen stromab des Strohschüttlers 32 angeordneten Strohhäcksler (nicht eingezeichnet) ausgetragen. Das gereinigte Getreide aus dem Korntank 50 kann durch ein Entladesystem mit Querschnecken 54 und einem Entladeförderer 56 entladen werden.

Die genannten Systeme werden mittels eines Verbrennungsmotors 58 angetrieben und von einem Bediener aus einer Fahrerkabine 60 heraus kontrolliert und gesteuert. Die verschiedenen Vorrichtungen zum Dreschen, Fördern, Reinigen und Abscheiden befinden sich innerhalb des Rahmens 12. Außerhalb des Rahmens 12 befindet sich eine Außenhülle, die größtenteils aufklappbar ist. Es bleibt anzumerken, dass das hier dargestellte Mehrtrommeldreschwerk nur ein Ausführungsbeispiel ist. Es könnte auch durch eine einzige quer angeordnete Dreschtrommel und eine nachgeordnete Trenneinrichtung mit einem Strohschüttler oder einem oder mehreren Trennrotoren ersetzt werden.

Die Figur 2 zeigt eine perspektivische Ansicht des Dreschkorbs 34 von vorn und schräg oben her betrachtet. Dieser oder ein ähnlicher Dreschkorb könnte auch als Separierkorb 36 verwendet werden. Der Dreschkorb 34 umfasst seitliche Wangen 62, die parallel zueinander orientiert und voneinander beabstandet sind. Zwischen den Wangen 62 sind Bogenleisten 64 verteilt, die ebenfalls parallel zueinander und zu den Wangen 62 orientiert und voneinander beabstandet sind. Quer zu den Wangen 62 und Bogenleisten 64, d. h. in axialer Richtung des Dreschkorbs 34, sind Dreschleisten 68 vorgesehen. Die Flussrichtung des Ernteguts ist in der Figur 2 von links unten nach rechts oben gerichtet. Die Wangen 62 und die Bogenleisten 64 bilden gemeinsam mit den fest am Dreschkorb angebrachten Dreschleisten 68 des zweiten und dritten Dreschabschnitts 78, 82 eine tragende Struktur des Dreschkorbs 34. Richtungsangaben zum Dreschkorb 34, wie axial und radial, beziehen sich auf die Drehachse der Dreschtrommel 22.

Am in Gutflussrichtung vorderen Ende des Dreschkorbs 34 ist ein konkaves Einlaufblech 66 angebracht, dem eine Reibleiste 70 folgt. Stromab der Reibleiste 70 befindet sich ein erster Dreschabschnitt 72, der aus drei seitlich nebeneinander angeordneten, herausnehmbaren Einsätzen 74 aufgebaut ist. Die herausnehmbaren Einsätze 74 setzen sich jeweils aus einem Rahmen mit sich axial erstreckenden Dreschleisten 68 und sich in Umfangsrichtung des Dreschkorbs 34 erstreckenden Bogenleisten 64 zusammen. Durch die Dreschleisten 68 sind sich in Umfangsrichtung erstreckende Korbdrähte 76 hindurchgeführt, die als Siebbelag dienen. Die herausnehmbaren Einsätze 74 können durch andere Einsätze 74 mit anders dimensionierten Durchlassöffnungen ausgetauscht werden.

Stromab des ersten Dreschabschnitts 72 befindet sich der zweite, fest mit den Wangen 62 verbundener Dreschabschnitt 78, der durch sich zwischen den Wangen 62 erstreckende Dreschleisten 68 und durch die Dreschleisten 68 geführte Korbdrähte 80 aufgebaut ist. Die Abstände zwischen den benachbarten Dreschleisten 68 und benachbarten Korbdrähten 80 sind im zweiten Dreschabschnitt 78 kleiner als die Abstände zwischen den benachbarten Dreschleisten 68 und benachbarten Korbdrähten 76 im ersten Dreschabschnitt 72, könnten aber auch größer sein.

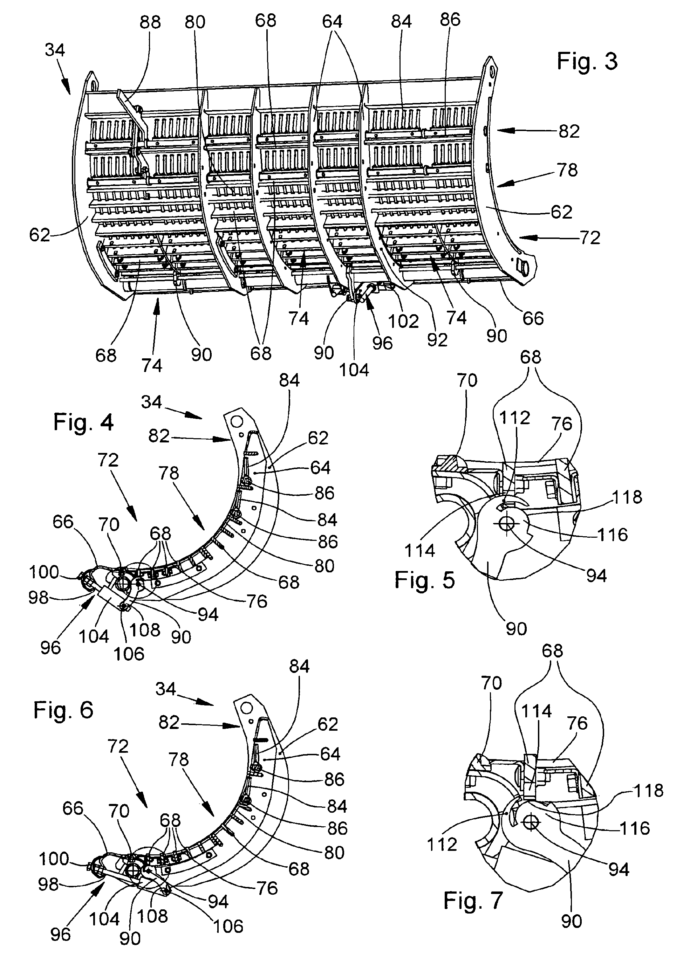

Stromab des zweiten Dreschabschnitts 78 folgt am Dreschkorb 34 der dritte Dreschabschnitt 82, der sich aus zwei hintereinander angeordneten Fingerleisten 84 zusammensetzt. Die Fingerleisten sind an rechteckigen Stäben 86 befestigt, die sich zwischen den Wangen 62 erstrecken und durch einen geeigneten Verstellantrieb 88 (vgl. Figur 3) synchron um ihre Längsachsen drehbar sind. Hierzu wird auch auf die Offenbarung der DE 10 2009 047 287 A1 verwiesen. Jeweils vor den Fingerleisten 84 ist eine sich axial zwischen den Wangen 62 erstreckende Dreschleiste 68 starr befestigt.

In der Figur 3 ist der Dreschkorb 34 in einer Ansicht von schräg hinten und unten dargestellt. Aus Gründen der besseren Erkennbarkeit des Verstellantriebs 88 und von Halteelementen 90 zur Fixierung der Einsätze 74 in der tragenden Struktur des Dreschkorbs 34 sind die den Wangen 62 jeweils direkt benachbarten Bogenleisten 64 weggelassen worden. Es ist erkennbar, dass den Bogenleisten 64 der Einsätze 74 in radialer Richtung nach außen jeweils noch Abschnitte 92 der Bogenleisten 64 der tragenden Struktur des eigentlichen Dreschkorbs 34 folgen, um dessen Stabilität sicherzustellen.

Die bereits erwähnten Halteelemente 90 dienen dazu, die Einsätze 74 im Dreschkorb 34 lösbar zu fixieren. Dazu sind sie zwischen einer Halteposition, wie sie in den Figuren 4 und 5 dargestellt ist, und einer Freigabeposition, wie sie in den Figuren 6 und 7 wiedergegeben ist, bewegbar. Jedem der drei Einsätze 74 ist ein einziges Halteelement 90 zugeordnet, wobei es auch möglich wäre, eine andere Anzahl an Einsätzen 74 zu verwenden und/oder ihnen jeweils zwei oder mehr Halteelemente 90 zuzuordnen. Die Halteelemente 90 sind an einer Welle 94 starr befestigt. Die Welle 94 erstreckt sich axial zwischen den Wangen 62 und durch Bohrungen in den Abschnitten 92 der Bogenleisten 64. Die Fixierung der Welle 94 in axialer Richtung erfolgt durch die Wangen 62, die von außen an den Enden der Welle 94 anliegen.

Die Welle 94 ist durch einen Antrieb 96 um ihre Längsachse drehbar. In der dargestellten Ausführungsform umfasst der Antrieb 96 eine Schraubspindel 98, deren Kopf 100 an der Vorderseite des Einlaufblechs 66 an einem konkaven Blechhalter 100 anliegt und deren Gewinde mit einer Mutter 102 zusammenwirkt, die wiederum an einem Winkelhebel 104 befestigt ist. Der Winkelhebel 104 ist über einen Schwenkstift 106 mit einem unteren Arm 108 des mittleren Halteelements 90 verbunden, das starr an der Welle 94 angebracht ist. Eine Drehung der Schraubspindel 98 hat somit ein Verschieben der Mutter 102 entlang der Schraubspindel 98, ein Verschieben des Winkelhebels 104 und schließlich ein Verschwenken des mittleren Halteelements 90 und der Welle 94 um ihre Längsachse und eine Drehung der anderen (starr mit der Welle 94 verbundenen) Halteelemente 90 zur Folge. Die Anbringung der Schraubspindel 98 an der Vorderseite des Einlaufblechs 66 ermöglicht eine gute Zugänglichkeit zum Antrieb 96. Eine zweite, in der Figur 3 gezeigte Schraubspindel mit einem Kopf 110 kann (über einen nicht gezeigten Mechanismus) zur Verstellung der Fingerleisten 84 dienen. Es wäre denkbar, den hier dargestellten, manuell betätigten Verstellantrieb 96 durch einen fremdkraftbetätigten Aktor (Hydraulikzylinder oder Elektromotor) zu ersetzen oder zu ergänzen.

Die Halteelemente 90 umfassen in ihrem oberen, der Welle 94 benachbarten Bereich einen spitz zulaufenden Haken 112, der sich in der Halteposition in eine passende Öffnung 114 in der vordersten Dreschleiste 68 des Einsatzes 74 hinein erstreckt und den Einsatz 74 in radialer Richtung des Dreschkorbs 34 fixiert. In der Freigabeposition erstreckt sich der Haken 112 hingegen nicht in die Öffnung 114 hinein. Um das Herausnehmen der Einsätze 74 aus dem Dreschkorb 34 zu erleichtern, umfassen die Halteelemente 90 weiterhin einen Exzenter 116, dessen äußere Fläche 118 unterhalb der vordersten Dreschleiste 68 des Einsatzes 74 positioniert ist. Wenn das Halteelement 90 in der Halteposition ist (Figuren 4 und 5), ist ein gewisser, wenn auch ggf. sehr kleiner Abstand zwischen der Fläche 118 und der Dreschleiste 68 vorhanden oder die Fläche 118 liegt an der Dreschleiste 68 an. Wenn sich das Halteelement 90 hingegen in der Freigabeposition befindet, bewegt die Fläche 118 des Exzenters 116 den Einsatz 74 nach oben (Figur 6 und 7), sodass er leichter angefasst und nach vorn aus dem Dreschbereich des Mähdreschers 10 entnommen werden kann. Zuvor wird der Dreschkorb 34 zweckmäßigerweise durch zum Verstellen des Dreschspalts dienende Aktoren (nicht gezeigt) in eine möglichst weit von der Dreschtrommel 22 beabstandete Stellung gebracht. Die Einsätze 74 können dann getauscht und durch Betätigen des Verstellantriebs 96 werden die Halteelemente 90 wieder in die Halteposition verbracht, um die Einsätze 74 zu arretieren.

Es wäre auch denkbar, den Exzenter 116 mit der Fläche 118 vorn Halteelement 90 getrennt an der Welle 94 anzubringen.

Im rückwärtigen Bereich werden die Einsätze 74 nach unten (radial) durch ihre Bogenleisten 64 arretiert, die an den Abschnitten 92 der Bogenleisten 64 der tragenden Struktur des Dreschkorbs 34 anliegen. In Umfangsrichtung erfolgt die Arretierung durch die hintersten Dreschleisten 68 der Einsätze, die an den vordersten Dreschleisten 68 des zweiten Dreschabschnitts 78 anliegen. Eine Arretierung der rückwärtigen Bereiche der Einsätze 74 gegen eine radial nach innen gerichtete Bewegung ist nicht vorgesehen und auch nicht erforderlich, denn das Erntegut drückt die Einsätze 74 im Betrieb nach außen.

Es sei noch angemerkt, dass die Haken 112 der Halteelemente 90 nicht unbedingt mit in den Dreschleisten 68 der Einsätze 74 eingebrachten Öffnungen 114 zusammenwirken müssen, sondern es könnten an den Dreschleisten 68 auch Laschen (nicht gezeigt) angebracht sein, in welche die Haken 112 eindringen können. Analog muss die Welle 94 nicht unbedingt an den Wangen 62 und Bogenleisten 64 des Dreschkorbs 34 abgestützt sein, sondern es könnten separate Halterungen vorgesehen werden, die an beliebiger Stelle am Dreschkorb 34 befestigt werden.

## Patentansprüche

1. Dreschkorb (34) mit einer tragenden Struktur, wenigstens einem lösbar an der tragenden Struktur fixierten oder fixierbaren Einsatz (74) mit einem Siebbelag und einem beweglich an der tragenden Struktur abgestützten Halteelement (90), das zwischen einer Halteposition, in der es sich in eine Öffnung (114) im Einsatz (74) erstreckt und den Einsatz (74) in einer Arbeitsposition an der tragenden Struktur fixiert, und einer Freigabeposition bewegbar ist, in der es sich nicht in die Öffnung (114) erstreckt und der Einsatz (74) von der tragenden Struktur abgenommen werden kann, **dadurch gekennzeichnet, dass** das Halteelement (90) an einer Welle (94) befestigt ist, welche zwischen der Halteposition und der Freigabeposition um ihre Längsachse drehbar ist, und dass das Halteelement (90) mit einer an einem Exzenter (116) angebrachten Fläche (118) gekoppelt ist, die den Einsatz (74) bei in die Freigabeposition verbrachtem Halteelement (90) aus seiner Arbeitsposition in eine angehobene Position verbringt.

2. Dreschkorb (34) nach Anspruch 1, **dadurch gekennzeichnet, dass** das Halteelement (90) einen spitz zulaufenden Haken (112) umfasst.

3. Dreschkorb (34) nach Anspruch 1 oder 2, **dadurch gekennzeichnet, dass** sich die Längsachse der Welle (94) in axialer Richtung des Dreschkorbs (34) erstreckt.

4. Dreschkorb (34) nach einem der Ansprüche 1 bis 3, **dadurch gekennzeichnet, dass** sich die Welle (94) an der Einlassseite des Dreschkorbs (34) erstreckt.

5. Dreschkorb (34) nach einem der Ansprüche 1 bis 4, **dadurch gekennzeichnet, dass** mehrere Einsätze (74) seitlich nebeneinander im Dreschkorb (34) angeordnet oder anordenbar sind, und dass den Einsätzen (74) jeweils ein Halteelement (90) zugeordnet ist.

6. Tangentialdreschwerk mit einer Dreschtrommel (22) und einem Dreschkorb (34) nach einem der vorhergehenden Ansprüche.

7. Mähdrescher (10) mit einem Tangentialdreschwerk nach Anspruch 6.

## Claims

1. Concave (34) with a supporting structure, at least one insert (74) which is fixed or is fixable releasably to the supporting structure and has a sieve lining, and a retaining element (90) which is supported moveably on the supporting structure and is moveable between a retaining position, in which said retaining element extends into an opening (114) in the insert (74) and fixes the insert (74) to the supporting structure in a working position, and a release position, in which said retaining element does not extend into the opening (114) and the insert (74) can be removed from the supporting structure, **characterized in that** the retaining element (90) is fastened to a shaft (94) which is rotatable about the longitudinal axis thereof between the retaining position and the release position, and **in that** the retaining element (90) is coupled to a surface (118) which is provided on an eccentric (116) and, when the retaining element (90) is brought into the release position, brings the insert (74) out of the working position thereof into a raised position.

2. Concave (34) according to Claim 1, **characterized in that** the retaining element (90) comprises a tapering hook (112).

3. Concave (34) according to Claim 1 or 2, **characterized in that** the longitudinal axis of the shaft (94) extends in the axial direction of the concave (34).

4. Concave (34) according to one of Claims 1 to 3, **characterized in that** the shaft (94) extends on the inlet side of the concave (34).

5. Concave (34) according to one of Claims 1 to 4, **characterized in that** a plurality of inserts (74) are arranged or are arrangeable laterally next to one another in the concave (34), and **in that** a retaining element (90) is assigned to each of the inserts (74).

6. Tangential threshing gear with a drum (22) and a concave (34) according to one of the preceding claims.

7. Combine harvester (10) with a tangential threshing gear according to Claim 6.

## Revendications

1. Contre-batteur (34) comprenant une structure porteuse, au moins un insert (74), fixé ou pouvant être fixé de manière amovible à la structure porteuse et doté d'une garniture de tamis, et un élément de retenue (90) supporté de manière mobile sur la structure porteuse, lequel élément de retenue peut être déplacé entre une position de retenue, à laquelle il s'étend dans une ouverture (114) dans l'insert (74) et fixe l'insert (74) sur la structure porteuse dans une position de travail, et une position de libération, à laquelle il ne s'étend pas dans l'ouverture (114) et l'insert (74) peut être retiré de la structure porteuse, **caractérisé en ce que** l'élément de retenue (90) est fixé à un arbre (94) qui peut tourner autour de son axe longitudinal entre la position de retenue et la position de libération, et **en ce que** l'élément de retenue (90) est accouplé à une surface (118) fixée à un excentrique (116), laquelle surface amène l'insert (74) hors de sa position de travail dans une position soulevée lorsque l'élément de retenue (90) a été amené dans la position de libération.

2. Contre-batteur (34) selon la revendication 1, **caractérisé en ce que** l'élément de retenue (90) comporte un crochet (112) se terminant en pointe.

3. Contre-batteur (34) selon la revendication 1 ou 2, **caractérisé en ce que** l'axe longitudinal de l'arbre (94) s'étend dans la direction axiale du contre-batteur (34).

4. Contre-batteur (34) selon l'une quelconque des revendications 1 à 3, **caractérisé en ce que** l'arbre (94) s'étend du côté d'entrée du contre-batteur (34).

5. Contre-batteur (34) selon l'une quelconque des revendications 1 à 4, **caractérisé en ce que** plusieurs inserts (74) sont disposés ou peuvent être disposés de manière juxtaposée latéralement dans le contre-batteur (34), et **en ce qu'**un élément de retenue (90) est associé à chaque fois aux inserts (74).

6. Mécanisme de battage tangentiel comprenant un tambour de battage (22) et un contre-batteur (34) selon l'une quelconque des revendications précédentes.

7. Moissonneuse-batteuse (10) comprenant un mécanisme de battage tangentiel selon la revendication 6.
